# EUROPÄISCHE PATENTSCHRIFT

(11) **EP 2 332 843 B1**
(45) Veröffentlichungstag und Bekanntmachung des Hinweises auf die Patenterteilung: **20.06.2012**
(21) Anmeldenummer: 10193768.8
(22) Anmeldetag: 06.12.2010
(51) Int. Cl.: B65B 51/26, B29C 65/74, B65H 23/025

(54) **Längstrennschweißvorrichtung für eine Folienverpackungsmaschine**
Longitudinal welding device for a film packaging machine
Dispositif de soudage de séparation longitudinale pour une machine d'emballage de feuilles

(30) Priorität: 14.12.2009 DE 102009059049
(43) Veröffentlichungstag der Anmeldung: 15.06.2011
(73) Patentinhaber: Beck Packautomaten GmbH & Co. KG, 72636 Frickenhausen (DE)
(72) Erfinder: Schumayer, Ulrich, 72622 Nürtingen (DE); Schaef, Daniel, 72636 Frickenhausen (DE)
(74) Vertreter: Witte, Weller & Partner

(56) Entgegenhaltungen:
- DE-A1- 3 033 908
- DE-A1-102005 033 775
- DE-B1- 2 751 118
- GB-A- 1 027 626
- US-A- 2 715 024
- US-A- 2 947 057
- US-A- 3 142 608

## Beschreibung

Die vorliegende Erfindung betrifft eine Längstrennschweißvorrichtung zum Längsverschweißen einer Längsseite einer oberen und einer unteren Folienbahn, wobei die Längstrennschweißvorrichtung mindestens ein erstes Paar von über jeweils mindestens zwei Rollen laufenden Endlosriemen aufweist, die die obere und die untere Folienbahn zwischen sich einziehen und in einer Folienebene führen, wobei parallel zu dem mindesten einen ersten Paar von Endlosriemen ein durch die Folienebene ragendes Schweißmesser auf einer ersten Seite der Folienebene angeordnet ist, wobei ein auf der ersten Seite der Folienebene angeordneter Endlosriemen des ersten Paars von Endlosriemen an der Folienebene in einer Nut einer Stützschiene geführt ist.

Eine derartige Längstrennschweißvorrichtung ist bspw. aus der Druckschrift DE 27 51 118 B bekannt.

Des Weiteren betrifft die vorliegende Erfindung ein Längstrennschweißsystem mit zwei erfindungsgemäßen Längstrennschweißvorrichtungen und eine Folienverpackungsmaschine mit einer erfindungsgemäßen Längstrennschweißvorrichtung, bei der in Bezug auf eine Folientransportrichtung vor der Längstrennschweißvorrichtung eine Quertrennschweißvorrichtung vorgesehen ist, die die obere und die untere Folienbahn zumindest teilweise verschweißt und trennt, wobei an mindestens einer Längsseite der oberen und der unteren Folienbahn mindestens ein Paar von Rädern angeordnet ist, deren Abrollrichtung relativ zu der Transportrichtung unter einem Winkel nach außen verläuft.

Eine derartige Folienverpackungsmaschine ist bspw. aus der Druckschrift DE 10 2005 033 775 A1 bekannt.

Folienverpackungsmaschinen sind im Bereich der industriellen Technik bereits seit langem bekannt. Insbesondere werden sie dazu eingesetzt, um Verpackungen für alle Arten von Gütern zu erzeugen. Beispielsweise werden Datenträger wie DVDs oder CDs regelmäßig in eine Folie verpackt vertrieben. Aber auch Zeitungen mit Beilegern, Bücher, Ersatzteile oder alle Arten von in Supermärkten vertriebenen Artikeln werden gewöhnlicherweise mit einer Folienumverpackung versehen.

Bei den Folienverpackungsmaschinen wird grundsätzlich zwischen zwei Arten von Anlagen unterschieden, zum einen den Formschultermaschinen und zum anderen den Serienpackmaschinen.

Bei den Formschultermaschinen wird mittels einer Formschulter zunächst ein Folienhalbschlauch gebildet, der um das zu verpackende Packgut gelegt wird. Mittels einer Quertrennschweißvorrichtung wird dann in der Regel zunächst ein in Bezug auf eine Folientransportrichtung vordere Seite des Folienhalbschlauchs verschweißt und getrennt. Anschließend wird das Packgut fortbewegt und dabei die offen verbleibende Längsseite des Folienhalbschlauchs mittels einer Längstrennschweißvorrichtung verschweißt und der Folienüberstand abgetrennt. Das Packgut hat sich dabei durch die Quertrennschweißvorrichtung hindurchbewegt, so dass nun eine hintere Querseite verschweißt und abgetrennt wird, was gleichzeitig auch den Quertrennschweißvorgang der Vorderseite des nachfolgenden Packguts darstellt. Bei Formschultermaschinen werden somit drei Seiten verschweißt.

Bei Serienpackmaschinen wird jeweils eine Folienbahn von oben und eine Folienbahn von unten um das Packgut gelegt. Die beiden Folienbahnen hüllen somit das Packgut ein. Häufig werden die obere Folie und die untere Folie dann von einer Quertrennschweißvorrichtung zunächst an einer in Bezug auf eine Transportrichtung der Folien vorderen Seite des Packguts zusammengeschweißt und getrennt und das Packgut dann durch ein Längsschweißsystem geführt. Ein derartiges Längsschweißsystem weist an jeder Seite jeweils eine Längsschweißvorrichtung auf, so dass die obere Folie und die untere Folie an beiden Seiten längsverschweißt und ein Folienüberstand abgetrennt wird. Dabei hat sich das Packgut durch die Quertrennschweißvorrichtung hindurchbewegt, so dass nun die obere Folie und die untere Folie an einer Hinterseite des Packguts mittels der Quertrennschweißvorrichtung verschweißt und abgetrennt werden können. Grundsätzlich kann alternativ aber auch vorgesehen sein, dass zunächst eine Längsverschweißung der Folien stattfindet und daran anschließend erst die Quertrennschweißung der oberen und der unteren Folie vorgenommen wird.

Die im Rahmen dieser Erfindung vorgestellten Verbesserungen sind vorzugsweise zur Anwendung in Serienpackmaschinen vorgesehen, können jedoch grundsätzlich auch in Formschultermaschinen Anwendung finden.

Bei der Verwendung von Folienverpackungsmaschinen spielt grundsätzlich die Menge der verwendeten Folie eine Rolle. Da die Umverpackung möglichst kostengünstig erzielt werden soll, wird an die Konstruktion von Folienverpackungsmaschinen die Anforderung gestellt, den bei der Verpackung anfallenden Verschnitt an Folie zu minimieren. Dabei ist zu unterscheiden zwischen als Überstand abgetrenntem Folienmaterial, das grundsätzlich als Abfall anfällt, aber recycelt werden kann, und zwischen nicht notwendigerweise für die Umverpackung verwendetem Folienmaterial. Dies bedeutet, das abhängig von der Konstruktion der Folienverpackungsmaschine mehr Material zur Umverpackung eines bestimmten Packguts verwendet wird, als dies minimal notwendig ist. Dadurch entstehen Mehrkosten, die vermeidbar sind.

Derartiges überschüssiges Material kann auch sichtbar zutage treten und dadurch einen optischen Mangel darstellen. Daher werden häufig im Anschluss an die Folienverpackungsmaschine sog. Schrumpftunnel verwendet, die die Folien erwärmen und auf das zu verpackende Packgut aufschrumpfen, so dass zwischen der Verpackungsfolie und dem Packgut keinerlei Spiel mehr besteht. Insbesondere bei Serienpackmaschinen und bei der Verpackung von wenig wärmebeständigen Materialien, bspw. Papier bzw. Zeitschriften, wird aber kein anschließender Schrumpftunnel verwendet. So kommt es dann häufig vor, dass die Folienumverpackung an den Rändern der Zeitschrift bzw. dem Packgut um einige Millimeter oder sogar Zentimeter übersteht und die Zeitschrift mit Spiel in der Folienverpackung bewegbar ist.

Insbesondere bei Längstrennschweißvorrichtungen in Serienpackmaschinen ist ein abhängig von der Konstruktion der Längstrennschweißvorrichtung anfallender Überstand zwischen einem Rand des Packguts und der Schweißnaht besonders kritisch, da dieser auf beiden Seiten des Packguts anfällt, so dass sich der so erzeugte Überstand verdoppelt.

Der Folienüberstand zwischen Packgut und Schweißnaht wird bei Längstrennschweißvorrichtungen dadurch bedingt, dass im Bereich eines Trennschweißmessers eine Spannung und Führung der Folie zu beiden Seiten des Trennschweißmessers erfolgen muss, um eine den qualitativen Anforderungen entsprechende Schweißnaht zu erzeugen. Dies geschieht mittels zweier Endlosriemenpaare, die die Folienbahn zwischen sich einziehen und in einer Folienebene führen. Einer dieser Endlosriemen liegt somit auf einer dem Packgut zugewandten Seite des Schweißmessers, während der andere auf der dem Packgut abgewandten des Schweißmessers liegt. Der Abstand zwischen dem Schneidmesser und dem Packgut wird somit durch verschiedene Faktoren beeinflusst, bspw. die Riemenbreite, weitere eventuell vorgesehene Riemenführungselemente, die Ausgestaltung der Schneide des Schneidmessers usw.

Bei der Konstruktion dieser Längsschweißvorrichtungen ist somit stets eine schwierige Abwägung zwischen Anzahl und Breite der Führungselemente und der Qualität der Querstraffung der Folie im Bereich des Schneidmessers zu treffen.

Im Stand der Technik wurden verschiedene Versuche unternommen, diesen Kompromiss zufriedenstellend zu lösen. So zeigt bspw. die Druckschrift DE 27 51 118 A1 eine geneigte Spannschiene im Bereich des Schneidmessers. Diese soll dazu dienen, einen faltenfreien Schweißvorgang bei möglichst schmaler Ausgestaltung des dem Packgut zugewandten Endlosriemens zu bewirken.

Des Weiteren zeigt die Druckschrift DE 199 05 888 A1 eine Verschweißeinrichtung für verschweißbare Folien, bei der ein dem Packgut zugewandter Transport- und Andrückriemen bevorzugt schmal ausgeführt sein sollte. Zusätzlich sind jedoch Andrückschienen vorgeschlagen, die insbesondere im Berührungsbereich der Schweißvorrichtung die Endlosriemen und die Folienbahnen aneinanderdrücken sollen. Diese Andrückschienen nehmen jedoch häufig zusätzlichen Raum ein und tragen nicht notwendigerweise zur Minimierung des Folienüberstandes bei.

Des Weiteren zeigt die Druckschrift DE 100 21 470 A1 eine Schlauchbeutelverpackungsmaschine, die vorschlägt, den auf der dem Packgut abgewandten Seite des Schweißmessers befindlichen Endlosriemen unter einem Winkel nach außen bezüglich der Transportrichtung der Folienbahnen verlaufen zu lassen, um die Querstraffung der Folie im Bereich des Schweißmessers zu verbessern.

All diese Maßnahmen haben den Folienüberstand, insbesondere den von Serienpackmaschinen, aber bisher nicht zufriedenstellend bei gleichzeitiger Einhaltung von qualitativ hochwertigen Schweißnähten minimiert. Gegenwärtig fällt pro Längstrennschweißvorrichtung in etwa ein Folienüberstand von 8 mm an, was sich bei beidseitiger Längsschweißung auf einen Gesamtüberstand von 16 mm summiert.

Es ist daher eine Aufgabe der vorliegenden Erfindung, den zwischen einem Packgut und einer Schweißnaht bei Längstrennschweißung anfallenden Überstand zu minimieren, wobei die Qualitätsanforderungen an hochwertige dichte Schweißnähte eingehalten werden sollen.

Gemäß einem ersten Aspekt der vorliegenden Erfindung wird daher vorgeschlagen, eine Längstrennschweißvorrichtung der eingangs genannten Art dahingehend weiterzubilden, dass eine Seitenwand der Nut eine Aussparung aufweist, in der das Schweißmesser unmittelbar an dem Endlosriemen angeordnet ist.

Bislang war stets ein Sicherheitsabstand zwischen dem dem Packgut zugewandten Endlosriemen und dem Schweißmesser einzuhalten, um auf jeden Fall zu vermeiden, dass das Schweißmesser eventuell den Endlosriemen beschädigt oder durchtrennt. In der eingangs vorgestellten DE 100 21 470 A1 wurden daher Keilriemen vorgeschlagen, um ein Querwandern der Riemen zu vermeiden. Trotz allem sind aber immer noch Querschwingungen des Trums des Endlosriemens möglich, so dass ein Sicherheitsabstand von einigen Millimetern einzuhalten ist.

Durch die aus der Druckschrift DE 2 751 118 B bereits bekannte Führung des Endlosriemens in einer Nut einer Stützschiene können derartige Querschwingungen zuverlässig vermieden werden, so dass der einzuhaltende Sicherheitsabstand sich deutlich vermindert. Selbstverständlich weist eine seitliche Führung durch die Nut in Form von Seitenrädem der Nut ebenfalls eine gewisse Breite auf, so dass das Schweißmesser nicht unmittelbar an den Endlosriemen herangeführt werden kann. Daher weist die Längstrennschweißvorrichtung gemäß dem ersten Aspekt der Erfindung zudem eine Aussparung in einer Seitenwand der Nut auf, in der das Schweißmesser unmittelbar an dem Endlosriemen angeordnet ist.

Durch die Aussparung in der Seitenwand der Nut wiederum wird es möglich, das Schweißmesser sehr nahe an den Endlosriemen heranzuführen, wobei gleichzeitig eine ausreichende Führung des Endlosriemens in Querrichtung erhalten bleibt. Eine Beschädigung des Endlosriemens durch das Schneidmesser kann somit zuverlässig vermieden werden, die Einhaltung eines bisher vorzusehenden Sicherheitsabstandes wird auf nahezu Null herabgesetzt.

Somit wird auch der Abstand zwischen dem Packgut und der Längsschweißnaht auf diese Weise deutlich herabgesetzt.

Gemäß einem zweiten Aspekt der Erfindung wird ein Längstrennschweißsystem vorgeschlagen, das durch zwei Längstrennschweißvorrichtungen gemäß dem ersten Aspekt der Erfindung gekennzeichnet ist.

Das Längstrennschweißsystem gemäß dem zweiten Aspekt der Erfindung weist somit dieselben Vorteile auf wie die Längstrennschweißvorrichtung gemäß dem ersten Aspekt der Erfindung.

Gemäß einem dritten Aspekt der Erfindung wird vorgeschlagen, eine Folienverpackungsmaschine der eingangs genannten Art dahingehend weiterzubilden, dass ein Rad des mindestens einen Paars von Rädern eine gummierte Oberfläche aufweist und ein anderes Rad des mindestens einen Paars von Radern eine gerändelte Oberfläche aufweist und die des Weiteren durch eine Längstrennschweißvorrichtung gemäß dem ersten Aspekt gekennzeichnet ist.

Wie bereits voranstehend ausgeführt wurde, ist man grundsätzlich bemüht die Querstraffung im Bereich des Schweißmessers zu erhöhen. Mit Verringerung der Breite der im Bereich des Schweißmessers vorhandenen Endlosriemen wird es zunehmend schwerer in unmittelbarer Umgebung des Schweißmessers eine entsprechende Querstraffung zu erzeugen. Zudem sollte auch bereits im Bereich eines Quertrennschweißmessers eine ausreichende Querstraffung der Folienbahnen vorliegen. Ist das Quertrennschweißmesser vor der Längstrennschweißvorrichtung angeordnet, muss somit ohnehin für eine ausreichende Querstraffung mittels einer separaten Einrichtung gesorgt werden.

Dies ist bei Formschultermaschinen relativ unproblematisch, da diese mit einem bereits vorgeformten Halbschlauch arbeiten, so dass an dem offenen Ende des Halbschlauchs mit relativ großer Kraft gezogen werden kann.

Bei Serienpackmaschinen jedoch, bei denen die Folienbahnen an beiden Seiten offen sind, kann zu starkes Ziehen an einer Seite der Folienbahnen eine Querbewegung der Folienbahnen verursachen. Idealerweise sollte die Querstraffung daher mit an beiden Seiten gleich großen Querkräften bewirkt werden. Dazu ist es insbesondere notwendig, die Folienbahnen zuverlässig mittels des Querstraffungssystems zu ergreifen, um ein Herausrutschen der Folienbahnen zu vermeiden.

Gemäß dem dritten Aspekt der Erfindung wird dies dadurch erzielt, dass ein Rad eine gummierte Oberfläche aufweist und ein anderes Rad des mindestens einen Paars von Rädern eine gerändelte Oberfläche aufweist.

Die Rändelung kann somit um ein gewisses Maß in die gummierte Oberfläche der gegenüberliegenden Rolle eindrücken und die Folienbahn zuverlässig erfassen. Durch Vorsehung derartiger Räderpaare an beiden gegenüberliegenden Seitenrändern der Folienbahnen wird eine gute Querstraffung der Folienbahnen mit sicherem Halt zwischen den Rädern in den Führungseinrichtungen erzielt. Somit werden die Folienbahnen bereits mit ausreichender Querstraffung in die Längstrennschweißvorrichtung eingeführt, so dass die dort vorhandenen Endlosriemenelemente entlastet sind und mit geringerer Breite ausgeführt werden können. Die Endlosriemenelemente der Längstrennschweißvorrichtung müssen die Querstraffung nur noch aufrechterhalten, sie aber nicht bewirken.

Unter einer "gummierten Oberfläche" wird dabei gemäß der vorliegenden Erfindung nicht zwingend eine aus einem Gummi bzw. aus Kautschuk bestehende Oberfläche verstanden. Vielmehr ist unter dem Begriff "gummiert" eine Oberfläche mit einem hohen Haftreibungskoeffizienten und einer gewissen Nachgiebigkeit bzw. Elastizität zu verstehen, so dass die gerändelte Oberfläche der gegenüberliegenden Rolle um ein gewisses Maß in die Oberfläche der gummierten Rolle eindrücken kann.

Des Weiteren wird im Rahmen der vorliegenden Erfindung sowohl bei einer Halbschlauchfolie als auch bei zwei separat zugeführten Folien von einer "oberen" und einer "unteren" Folienbahn gesprochen, unabhängig davon, ob die obere und die untere Folienbahn an einer Seite ineinander übergehen oder nicht.

Die eingangs gestellte Aufgabe wird somit vollkommen gelöst.

In einer vorteilhaften Weiterbildung der Erfindung gemäß dem ersten Aspekt hüllen die obere und die untere Folie ein Packgut zwischen sich ein und die Seitenwand ist eine dem Packgut abgewandte Seitenwand.

Auf diese Weise wird erreicht, dass die Folie fest am Packgut anliegt und der Endlosriemen nicht an das Packgut schlagen kann.

Des Weiteren kann in vorteilhafter Weiterbildung vorgesehen sein, dass die Nut einen U-förmigen Querschnitt aufweist und die Seitenwand einen Schenkel des U bildet.

Mittels einer derartigen Nutform wird auf besonders einfache Weise eine sichere Führung des entsprechenden Endlosriemens bereitgestellt.

Vorzugsweise ist des Weiteren ein zweites Paar von über jeweils mindestens zwei Rollen laufenden Endlosriemen vorgesehen, die die obere und die untere Folienbahn zwischen sich einziehen und in der Folienebene führen, wobei zwischen dem ersten Paar von Endlosriemen und dem zweiten Paar von Endlosriemen ein Längsspalt gebildet ist, in dem das Schweißmesser angeordnet ist.

Durch das zusätzliche zweite Paar von Endlosriemen kann zusätzlich der sichere Transport der Folienbahnen sichergestellt werden. Des Weiteren wird so erreicht, dass auch die auf der dem Packgut abgewandten Seite des Schweißmessers befindliche Folie, die durch das Schweißmesser an sich abgetrennt wird, weiter gefördert wird.

Vorzugsweise ist vorgesehen, dass die Breite des ersten Paars von Endlosriemen kleiner als die Breite des zweiten Paars von Endlosriemen ist.

Die Breite des zweiten Paars von Endlosriemen hat keinen Einfluss auf den zu minimierenden Folienüberstand. Daher kann das zweite Paar von Endlosriemen grundsätzlich breiter ausgeführt werden, um wesentliche Spann- und Haltefunktionen zu übernehmen. Das erste Paar von Endlosriemen kann dann entsprechend schmaler ausgebildet sein, und der Abstand zwischen Schweißmesser und Packgut weiter reduziert werden.

Insbesondere kann vorgesehen sein, dass die Breite des ersten Paars von Endlosriemen 2,5 bis 6 mm, vorzugsweise 2,5 bis 4 mm, beträgt.

Vorzugsweise ist vorgesehen, dass das erste Paar von Endlosriemen über mindestens zwei Rollen läuft, wobei zwei der mindestens zwei Rollen in einem Betriebszustand relativ zueinander verschiebbar sind.

Insbesondere ist dabei vorgesehen, dass an den Einlauf der Folienbahnen jeder Endlosriemen eines Paars von Endlosriemen mittels zweier vertikal übereinander angeordneten Rollen geführt ist. Dabei kann bspw. vorgesehen sein, dass die obere Rolle relativ zu der unteren Rolle verschiebbar ist, indem sie in einem Langloch gelagert ist. Auf diese Weise kann wahlweise die Spannung von dem Endlosriemen genommen werden, um ihn bspw. auszutauschen.

Des Weiteren kann vorgesehen sein, dass das zweite Paar von Endlosriemen über mindestens drei Rollen läuft, wobei zwei der mindestens drei Rollen in einem Betriebszustand übereinander angeordnet und relativ zueinander verschiebbar sind.

In der Regel ist das zweite Paar von Endlosriemen über einen längeren Abschnitt entlang der Transportrichtung der Folienbahnen ausgebildet, so dass zur besseren Stützung des jeweiligen Endlosriemens mindestens drei Rollen vorgesehen werden. Wie bei dem ersten Paar von Endlosriemens sind entsprechend die am Einlauf der oberen und der unteren Folienbahn vorgesehenen Rollen jeweils zweifach vertikal übereinander angeordnet und relativ zueinander verschiebbar vorgesehen, bspw. indem die obere der beiden Rollen in einem Langloch gelagert ist.

Bevorzugterweise kann des Weiteren vorgesehen sein, dass in dem Längsspalt vor dem Schweißmesser eine Spannrolle auf der der ersten Seite gegenüberliegenden Seite der Folienebene angeordnet ist, wobei die Spannrolle federnd abgestützt ist und die Folienebene durchdringt.

Mittels einer derartigen Spannrolle kann eine weitere Straffung der oberen und der unteren Folienbahn bewirkt werden. Insbesondere wird mittels einer derartigen Spannrolle bewirkt, dass einer eventuell in einer der Folienbahnen vorhandenen Falte von der entsprechend anderen Folienbahn gefolgt wird, so dass dennoch eine dichte Schweißnaht erzeugt werden kann.

Des Weiteren kann vorgesehen sein, dass auch ein auf der der ersten Seite gegenüberliegenden Seite der Folienebene angeordneter Endlosriemen des ersten Paars von Endlosriemen an der Folienebene in einer Nut einer Stützschiene geführt ist, und eine Seitenwand der Nut eine Aussparung aufweist, in der das Schweißmesser zumindest teilweise angeordnet ist.

Unter Umständen und abhängig von Art und Form des Schweißmessers kann auch auf der gegenüberliegenden Seite der Folienebene eine entsprechende Anordnung einer Stützschiene mit Nut und Aussparung vorgesehen sein, falls das Schweißmesser bspw. entsprechend weit von der eine Seite der Folienebene durch die Folienebene auf die andere Seite der Folienebene herüberragt.

Bei einem Längstrennschweißsystem gemäß einem zweiten Aspekt der Erfindung kann insbesondere vorgesehen sein, dass die zwei Längstrennschweißvorrichtungen - bezüglich einer Transportrichtung - einander gegenüberliegend angeordnet und bezüglich der Transportrichtung der oberen und der unteren Folie spiegelbildlich ausgebildet sind.

Auf diese Weise ist besonders einfach eine für eine Serienpackmaschine geeignete Konfiguration geschaffen, so dass sich das Längstrennschweißsystem zum Einsatz in einer Serienpackmaschine eignet.

Bei einer Folienverpackungsmaschine gemäß einem dritten Aspekt der Erfindung kann insbesondere vorgesehen sein, dass an beiden Längsseiten der oberen und der unteren Folienbahn jeweils mindestens ein Paar von Rädern angeordnet ist, wobei die eine gummierte Oberfläche aufweisenden Räder einander gegenüberliegen und die eine gerändelte Oberfläche aufweisenden Räder einander gegenüberliegen.

Auch auf diese Weise ist die Folienverpackungsmaschine insbesondere zur Verarbeitung von separat zugeführten Folienbahnen, bspw. innerhalb einer Serienpackmaschine, geeignet. Durch die entsprechend gleichartige Zuordnung der Oberflächen auf beiden Seiten der Folienbahnen wird ein Verziehen der Folien aufgrund unterschiedlicher Oberflächeneigenschaften der Führungsräder vermieden.

Des Weiteren kann das mindestens eine Paar von Rädern in Bezug auf eine Folientransportrichtung vor der Quertrennschweißvorrichtung angeordnet sein.

Auf diese Weise wir eine ausreichende Querstraffung bereits im Bereich der Quertrennschweißvorrichtung sichergestellt. Alternativ oder kumulativ kann auch mindestens ein Paar von Rädern in der Längstrennschweißvorrichtung, insbesondere vor dem Schweißmesser und vor der Spannrolle, vorgesehen sein.

Die Rändelung kann beispielsweise gemäß DIN 82 RGE 1 vom Deutschen Institut für Normung e.V. (DIN) ausgebildet sein.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Ansicht einer erfindungsgemäßen Folienverpa- ckungsmaschine,
- Fig. 2: eine Seitenansicht einer erfindungsgemäßen Längstrennschweißvor- richtung,
- Fig. 3: eine Draufsicht auf ein erfindungsgemäßes Längstrennschweißsys- tem entlang einer Linie III-III in Fig. 2, und
- Fig. 4: einer Querschnittsansicht eines erfindungsgemäßen Längstrenn- schweißsystems entlang einer Linie IV-IV in Fig. 2.

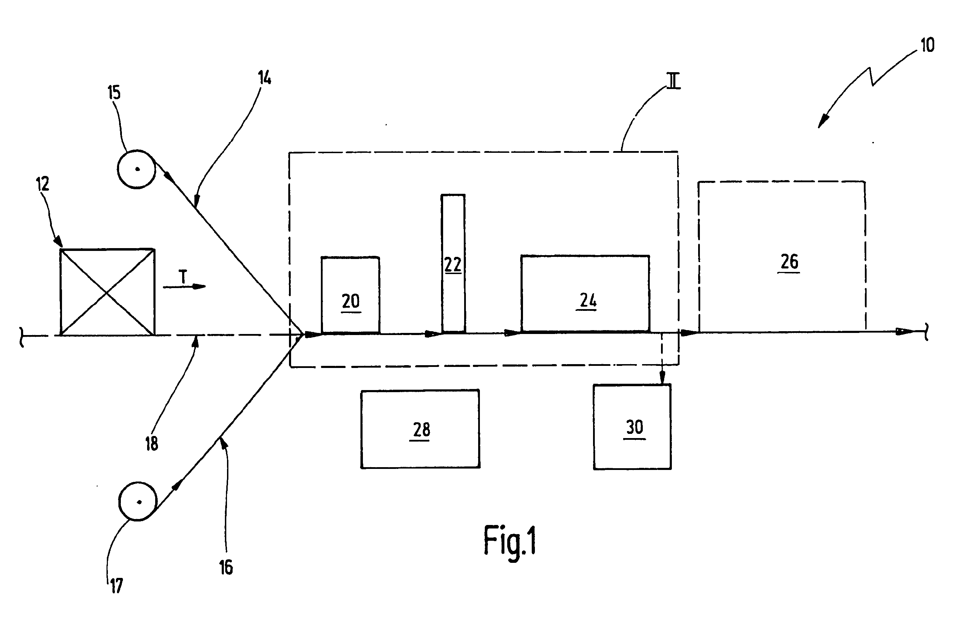

Fig. 1 zeigt eine Folienverpackungsmaschine 10 in einer schematischen Ansicht. Die Folienverpackungsmaschine 10 dient dazu, ein Packgut 12 mit einer Umverpackung zu versehen. Dazu wird das Packgut 12 in einer Transportrichtung T durch die Folienverpackungsmaschine 10 bewegt.

Das Packgut 12 wird von der Folienverpackungsmaschine 10 mit einer oberen Folienbahn 14, die von einer oberen Folienzuführung 15 abgewickelt wird, und einer unteren Folienbahn 16, die von einer unteren Folienzuführung 17 abgewickelt wird, eingehüllt. Diese Art der Einhellung entspricht dem Prinzip einer sog. Serienpackmaschine, so dass dementsprechend die vorliegende Erfindung am Beispiel einer als Serienpackmaschine ausgestalteten Folienverpackungsmaschine 10 erläutert wird.

Die obere Folienbahn 14 und die untere Folienbahn 16 laufen in einer Folienebene 18 zusammen. Das Packgut 12 fährt somit in die aufeinander zulaufende obere Folienbahn 14 und untere Folienbahn 16 ein, wobei die Folienbahnen 14, 16 zunächst einer Querstraffung unterzogen werden.

Dazu ist eine Querstraffungsvorrichtung 20 vorgesehen. Die mögliche Ausgestaltung dieser Querstraffungsvorrichtung wird mit Blick auf die folgenden Figuren noch näher erläutert. Das umhüllte Packgut 12 mit den quer gestrafften Folienbahnen 14, 16 erreicht dann eine Quertrennschweißvorrichtung 22. Die Quertrennschweißvorrichtung 22 schweißt die Folienbahnen 14, 16 quer zu der Transportrichtung T zusammen und durchtrennt die Folienbahnen 14, 16 zumindest teilweise, so dass das Packgut 12 entlang der Schweißnaht keinen Kontakt mehr zu dem ihm vorhergehenden Packgut hat. Die in Transportrichtung T weisende Seite des Packguts 12 ist somit bereits verschweißt.

Anschließend fährt das Packgut durch ein Längstrennschweißsystem 24, das dazu vorgesehen ist, die Folienbahnen 14, 16 seitlich des Packguts 12 zusammenzuschweißen und einen seitlichen Folienüberstand abzutrennen. Schließlich wird die entgegengesetzt zu der Transportrichtung T weisende Seite des Packguts 12 erneut von der Quertrennschweißvorrichtung 22 verschweißt und abgetrennt. Dieser Vorgang stellt dabei gleichzeitig die Abtrennung und Verschweißung der in die Transportrichtung T weisenden Seite eines nachfolgenden Packguts dar. Das Packgut 12 ist nun an allen vier Seiten verschweißt und beschnitten, so dass das Packgut 12 von einer Folienumhüllung komplett umgeben ist.

Die Abfolge der Quertrennschweißvorrichtung 22, des Längstrennschweißsystems 24 und der Querstraffungsvorrichtung 20 ist lediglich beispielhaft in einer häufig auftretenden Konfiguration wiedergegeben. Die Abfolge dieser Einrichtungen kann auch anders sein, bspw. kann vorgesehen sein, die Quertrennschweißvorrichtung 22 nach dem Längstrennschweißsystem 24 anzuordnen. Auch können Elemente der Querstraffungsvorrichtung 20 zwischen oder in der Quertrennschweißvorrichtung 22 oder dem Längstrennschweißsystem 24 vorgesehen sein.

In der Regel ist vorgesehen, dass sich dann ein Schrumpftunnel 26 anschließt, der auf eine bestimmte Temperatur erwärmt ist und die Folienbahnen 14, 16 auf das Packgut 12 aufschrumpft, so dass die Folienbahnen 14, 16 das Packgut 12 fest und ohne Spiel umschließen. Der Verpackungsvorgang ist dann abgeschlossen.

Das Vorhandensein eines Schrumpftunnels 26 hängt grundsätzlich von den an die Verpackung gestellten Anforderungen ab. Ein Schrumpftunnel 26 muss insbesondere bei Serienpackmaschinen nicht zwingend vorhanden sein.

Des Weiteren weist die Folienverpackungsmaschine 10 in der Regel Verstelleinrichtungen 28 auf, um die Verpackungsmaschine 10 an Packgüter unterschiedlicher Breite, Länge und Höhe einstellen zu können. Auch die Geschwindigkeit des Verpackungsvorgangs kann mittels der Verstelleinrichtungen 28 eingestellt werden. Des Weiteren sind Möglichkeiten vorgesehen, die Verpackungsmaschine 10 auf unterschiedliche Folientypen, die bspw. in Dicke, Reißfestigkeit und Oberflächenbeschaffenheit unterschiedlich sein können, einzustellen.

Letztlich ist in der Regel eine Folienrückführung 30 vorgesehen, die von dem Längstrennschweißsystem 24 abgetrenntes überschüssiges Folienmaterial sammelt, um es bspw. einem Recyclingprozess zuzuführen.

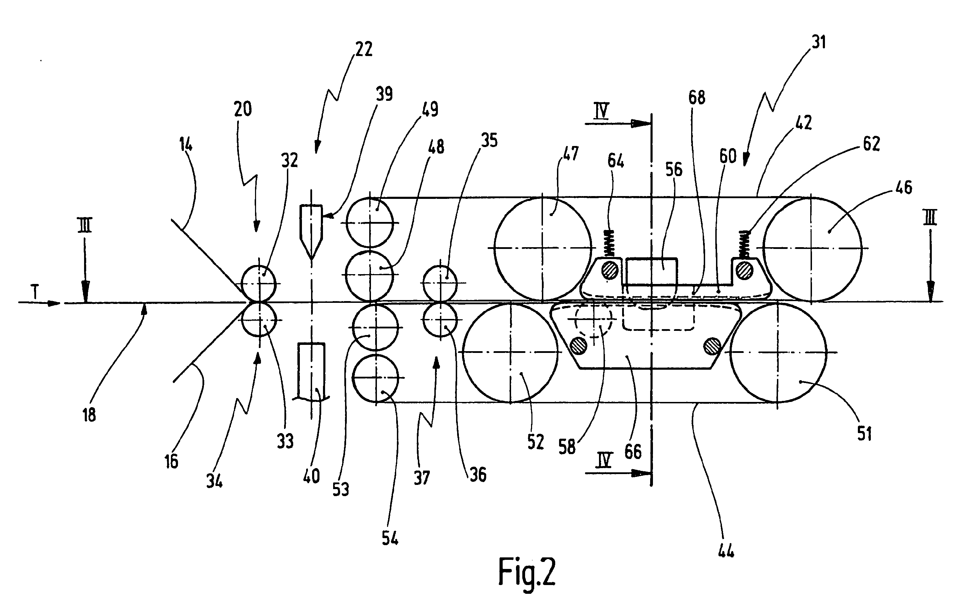

Mit II ist ein Ausschnitt der Folienverpackungsmaschine 10 bezeichnet, der in Fig. 2 in einer Detailansicht dargestellt ist.

Fig. 2 zeigt eine erfindungsgemäße Längstrennschweißvorrichtung 31 in einer Seitenansicht. Die Längstrennschweißvorrichtung 31 ist nach der Quertrennschweißvorrichtung 22 angeordnet. Vor der Quertrennschweißvorrichtung 22 ist die Querstraffungsvorrichtung 20 angeordnet. Die Querstraffungsvorrichtung 20 weist zwei Räder 32, 33 auf, die die Folienbahnen 14, 16 zwischen sich entlang der Folienebene 18 einziehen. Die Räder 32, 33 bilden ein erstes Räderpaar 34. Wie im weiteren Verlauf noch erläutert wird, ist eine Drehachse der Räder 32, 33 relativ zu der Transportrichtung T nach außen gewinkelt, so dass eine entsprechende Querstraffung erreicht wird.

Um sicherzustellen, dass die Räder 32, 33 die Folienbahnen 14, 16 sicher einziehen und durch die aufgebrachte Querkraft die Folienbahnen 14, 16 nicht in den Räder 32, 33 verrutschen, weist bspw. das Rad 32 eine gummierte Oberfläche auf, wohingegen das Rad 33 eine gerändelte Oberfläche aufweist, die etwa aus einem Metall besteht. Die Oberfläche des Rads 33 drückt dann in die Oberfläche des Rads 32 ein, so dass ein rutschfestes Erfassen und Halten der Folienbahnen 14, 16 sichergestellt ist.

Selbstverständlich kann die Oberflächenbeschaffenheit der Räder 32, 33 auch umgekehrt sein, so dass das Rad 32 die Rändelung und das Rad 33 die gummierte Oberfläche aufweist.

Die Räder 32, 33 stellen insbesondere eine optimale Querstraffung für den Quertrennschweißvorgang mittels der Quertrennschweißvorrichtung 22 sicher. Entsprechend ist in der Längstrennschweißvorrichtung 31 ein aus zwei Rädern 35, 36 bestehendes Räderpaar 37 vorgesehen, das dieselbe Funktion wie das erste Räderpaar 34 mit den Rädern 32, 33 erfüllt. Das Räderpaar 37 stellt so eine optimale Querstraffung der Folienbahnen 14, 16 für den Längstrennschweißvorgang bereit.

Der Quertrennschweißvorgang mittels der Quertrennschweißvorrichtung 22 wird von einem Oberstempel 39 und einem Unterstempel 40 bewirkt. Der Oberstempel 39 weist ein Schweißmesser auf, das gegen den Unterstempel 40 gedrückt wird und die Folienbahnen 14, 16 miteinander verschweißt und diese durchtrennt. Dazu werden der Oberstempel 39 und der Unterstempel 40 aufeinander zubewegt, so dass sie sich im Bereich der Folienebene 18 treffen. Der Schweißvorgang wird in der Regel mittels einer erhitzten Schneidklinge erzielt. Als Alternative zu der Schneidklinge kann auch ein beheizter Draht verwendet werden. Der Draht wird dabei nicht ständig auf einer hohen Temperatur gehalten, sondern nur impulsbeheizt. Der Draht kann sich dann bei geschlossenen Stempeln 39, 40 wieder abkühlen, was zu einem besseren Schweißergebnis führen kann.

Zum Transport und zur Fixierung der Folienbahnen 14, 16 sind in der Längstrennschweißvorrichtung zwei Endlosriemen 42, 44 vorgesehen, die die Folienbahnen 14, 16 in der Folienebene 18 zwischen sich einziehen und klemmen und die Folienbahnen 14, 16 und das Packgut 12 fördern. Jeweils ein Endlosriemen 42, 44 ist somit auf jeder Seite der Folienebene 18 angeordnet.

Der Endlosriemen 42 läuft um drei Rollen 46, 48, 49 um. Der Endlosriemen 44 läuft um drei Rollen 51, 53, 54 um.

Die Laufbahnen der Rollen 46 und 47 sowie 51 und 52 weisen denselben Durchmesser auf. Im Bereich den Endlosriemens 42 weisen die Rollen 47 und 52 jedoch bereits wieder einen geringeren Durchmesser auf, so dass die Endlosriemen 42, 44 nicht über die Rollen 47 und 52 laufen.

An der Stelle, an der die Folienbahnen 14, 16 von den Endlosriemen 42, 44 zwischen sich eingezogen werden, befinden sich die Rollen 48 und 53. Jeweils vertikal versetzt zu den Rollen 48 und 53 sind Rollen 49 bzw. 54 vorgesehen. Die Rollen 48 und 49 bzw. 53 und 54 sind relativ zueinander verschiebbar, bspw. indem die Rollen 49 und 54 in einem sich vertikal erstreckenden Langloch (nicht dargestellt) befestigt sind. Auf diese Weise kann die Spannung der Endlosriemen 42, 44 reguliert werden, insbesondere kann so auch ein leichtes Austauschen der Endlosriemen 42, 44 erreicht werden.

Die Folienbahnen 14, 16 werden entlang der Folienebene 18 von den Endlosriemen 42, 44 gefördert und durch ein Schweißmesser 56 geführt. In dem dargestellten Beispiel ist das Schweißmesser 56 ein feststehendes Schweißmesser, es kann grundsätzlich aber auch ein rotierendes Schweißmesser vorgesehen sein. Das Schweißmesser 56 wird mit einer geeigneten Vorrichtung erwärmt, so dass das Schweißmesser 56 die Folienbahnen 14, 16 durchtrennt und an ihrem Ende verschmelzt bzw. verschweißt.

Um dem Schweißmesser 56 die Folienbahnen 14, 16 möglichst faltenfrei zuzuführen, ist vor dem Schweißmesser 56 eine Spannrolle 58 vorgesehen, die auf der dem Schweißmesser 56 gegenüberliegenden Seite der Folienebene 18 angeordnet ist und diese durchdringt. Durch die Spannrolle 58 werden die Folienbahnen 14, 16 kurzzeitig angehoben und weitestgehend faltenfrei gezogen. Selbst wenn eine Falte nicht durch die Spannrolle 58 entfernt werden könnte, wird so zumindest sichergestellt, dass auch die jeweils andere Folienbahn 14, 16 sich entsprechend in die Falte legt, so dass die Folienbahnen 14, 16 ohne Lufteinschlüsse aufeinanderliegen, wenn sie verschweißt werden. So wird die Qualität einer hochwertigen Schweißnaht sichergestellt.

Des Weiteren ist eine Stützschiene 60 vorgesehen, die dazu vorgesehen ist, die Folienbahnen 14, 16 im Bereich des Schweißmessers 56 fest und glatt aufeinander zu pressen. Die Anpresskraft der Stützschiene 60 wird mittels geeigneter Federelemente 62, 64 erzeugt. Diese drücken die Stützschiene 60 auf eine gegenüberliegende Stützschiene 66. Die Stützschienen 60, 66 weisen dabei eine in Fig. 2 lediglich mit einer gestrichelten Linie angedeutete Aussparung 68 auf, in der das Schweißmesser 56 angeordnet ist. Die Aussparung 68 wird mit Blick auf die folgenden Figuren detaillierter beschrieben.

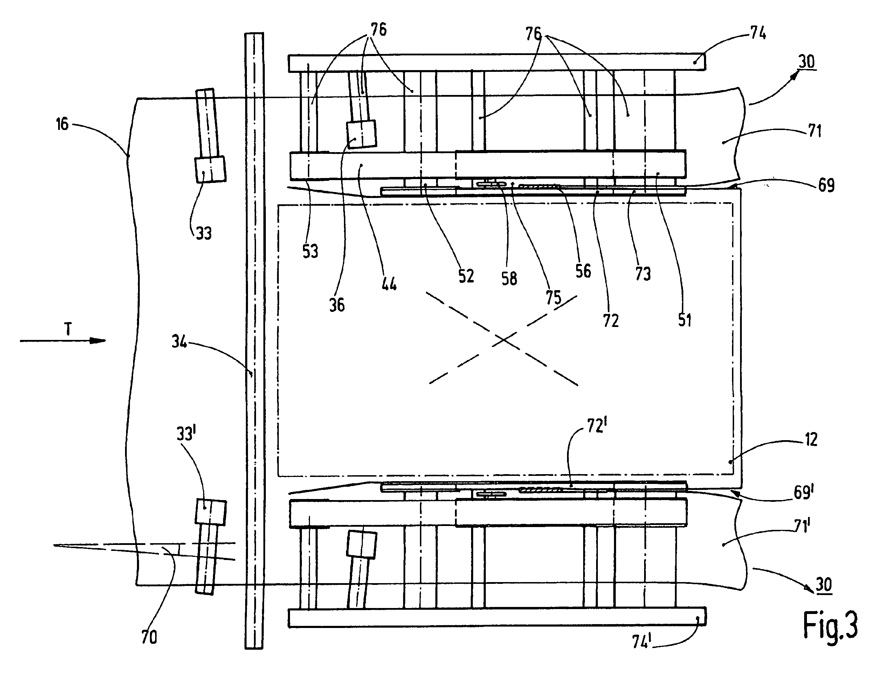

Fig. 3 zeigt eine Oberansicht entlang der mit III-III in Fig. 2 bezeichneten Folienebene 18.

Bei der in diesem Ausführungsbeispiel beschriebenen Folienverpackungsmaschine handelt es sich um eine sog. Serienpackmaschine. Entsprechend werden zwei Längsseiten 69 des Packguts 12 mittels einer entsprechenden Längstrennschweißvorrichtung 31 verschweißt. Somit weist das Längstrennschweißsystem 24 zwei Längstrennschweißvorrichtungen 31 auf, die einander gegenüberliegend angeordnet und spiegelbildlich aufgebaut sind. Folglich wird lediglich eine der beiden Längstrennschweißvorrichtungen 31 näher erläutert, Bezugszeichen der gegenüberliegenden Längstrennschweißvorrichtung 31 sind mit einem Strich trunkiert.

Der Ansicht in Fig. 3 ist auch ein Winkel 70 zu entnehmen, um den die Laufrichtungen der Räder 33 und 36 relativ zu der Transportrichtung T nach außen geneigt sind.

Das Schweißmesser 56 durchtrennt an der jeweiligen Längsseiten 69 die Folienbahnen 14, 16. Dadurch wird ein Abfallstreifen 71 erzeugt, der von den Endlosriemen 42, 44 gefördert wird. Dieser Abfallstreifen 71 wird der Folienrückführung 30 zugeführt.

Parallel zu dem Endlosriemen 44 ist ein zweiter Endlosriemen 72 auf der dem Packgut 12 zugewandten Seite des Schweißmessers 56 angeordnet. Dieser Endlosriemen 72 ist deutlich schmaler als der Endlosriemen 44 ausgebildet, insbesondere kann er eine Breite von etwa 3 mm aufweisen.

Somit werden die Folienbahnen 14, 16 im Bereich des Schweißmessers 56 zu beiden Seiten des Schweißmessers zusammengedrückt, geführt und transportiert.

Der Endlosriemen 72 läuft über eine Hilfsrolle 73 und die Rolle 52. Die Hilfsrolle 73 verläuft dabei konzentrisch zu der Rolle 51.

Des Weiteren ist ein Halteelement 74 vorgesehen, um die Rollen 51, 73, 52, 53, 54 und die entsprechend auf der gegenüberliegenden Seite der Folienebene 18 vorhandenen Rollenelemente zu halten.

Der Endlosriemen 44 und der Endlosriemen 72 bilden zwischen sich einen Längsspalt 75 aus, in dem das Schweißmesser 56 und die Spannrolle 58 angeordnet sind. Von dem Halteelement 74 aus erstrecken sich mehrere Haltewellen 76 (nicht einzeln nummeriert), die jeweils entsprechende Längen aufweisen, um die Rollenelemente 51, 52, 53, 54, 73, das Schweißmesser 56 und die Spannrolle 58 in entsprechenden, den Längsspalt 75 ausbildenden Abständen zueinander zu stützen.

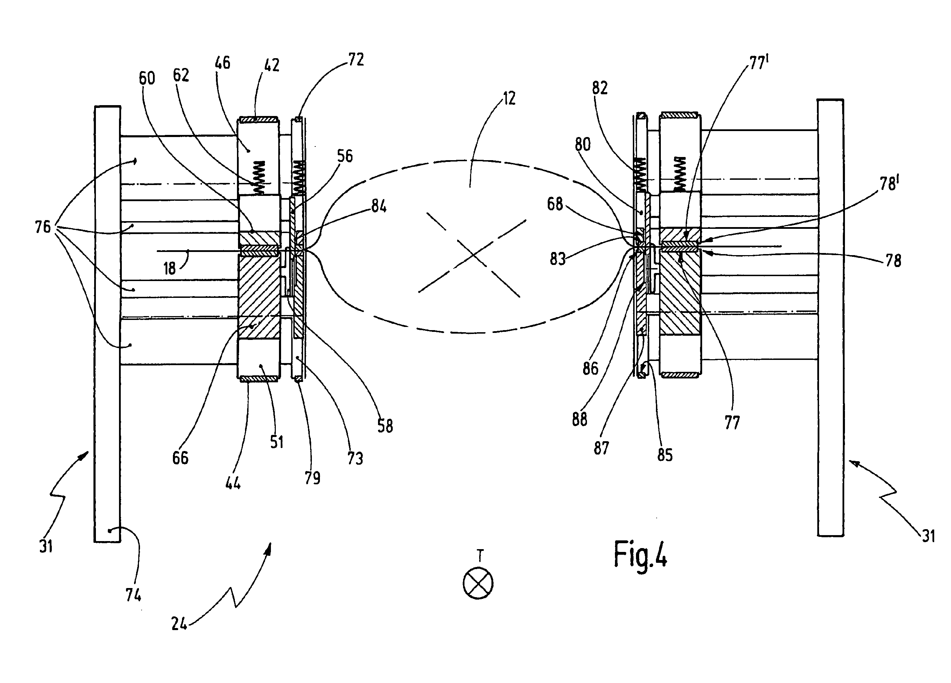

Fig. 4 zeigt eine Querschnittsansicht entlang der Linie IV-IV in Fig. 2.

Abgebildet in Fig. 4 ist das Längstrennschweißsystem 24 mit den zwei Längstrennschweißvorrichtungen 31 mit Blick in die Transportrichtung T.

In Bezug auf die Endlosriemen 42, 44 wird in dieser Ansicht erkennbar, dass diese auf den Rollen 46 bzw. 51 einer entsprechenden Nut 77 bzw. 77' geführt sind. Die Nut weist ein U-förmiges Querschnittsprofil auf, so dass die Schenkel des U eine seitliche Führung 78 bzw. 78' auf beiden Seiten des entsprechenden Riemens 42, 44 bereitstellt. Auf diese Weise wird verhindert, dass der entsprechende Endlosriemen 42, 44 von der jeweiligen Rollenführung seitlich abrutschen kann.

Eine erfindungsgemäße Verbesserung liegt hierbei bezüglich des schmaleren, unmittelbar am Packgut 12 anliegenden oberen Endlosriemens 72 bzw. eines entsprechenden unteren Endlosriemens 79 vor.

Die Verbesserung wird zunächst für den auf der Seite des Schweißmessers 56 der Folienebene 18 angeordneten Endlosriemens 72 beschrieben. Dieser wird wie auch bei dem entsprechenden breiteren parallelen Endlosriemen 42 von einer Stützschiene 80 auf die Folienebene 18 gedrückt. Die Stützschiene 80 ist dafür mittels eines Federelements 82 gespannt. Auch die Stützschiene 80 weist eine Nut 83 auf, in der der Endlosriemen 72 geführt ist. Die Nut 83 weist ebenfalls einen U-förmigen Querschnitt auf. Eine Seitenwand 84, die benachbart zu dem Schweißmesser 56, d.h. auf der dem Packgut 12 abgewandten Seite der Nut 83 liegt, weist im Bereich des Schweißmessers 56 die Aussparung 68 auf. In der in Fig. 4 dargestellten Querschnittsebene ergibt sich somit lediglich ein L-förmiger Querschnitt der Nut 83. Das Schweißmesser 56 kann so unmittelbar an dem Endlosriemen 72 angeordnet werden, wobei durch die Führung des Endlosriemens 72 in der Nut 83 keinerlei Gefahr besteht, dass der Riemen seitlich in das Schweißmesser 56 abrutscht und beschädigt wird.

Gleichzeitig wird es auf diese Weise möglich, wertvolle Millimeter bei der Positionierung der Schweißnaht so nah wie möglich an dem Packgut 12 zu gewinnen und den Folienüberstand zu minimieren.

Insbesondere wenn kein Schrumpftunnel 26 verwendet wird, wie dies in einer Serienpackmaschine häufig der Fall ist, führt es dazu, dass das Packgut 12 innerhalb der Folienverpackung Spiel hat, was vermieden werden soll und durch die Erfindung im Wesentlichen vermieden wird.

Ragt das Schweißmesser 56 durch die Folienebene 18 über den Endlosriemen 79 nach unten heraus, ist auch dort die Aussparung 68 fortzusetzen. Der Endlosriemen 79 ist entsprechend in einer Nut 85 geführt, die Aussparung 68 ist dann in einer Seitenwand 86 der Nut 85 vorgesehen. Entsprechend weist eine Stützschiene 87 für den unteren Endlosriemen 79 eine Aussparung 88 auf, die im Bereich des Schweißmessers 56 der Nut 85 einen L-förmigen Querschnitt verleiht, so dass in dem Bereich des Schweißmessers 56 ebenfalls keine Seitenwand 86 vorhanden ist. Die Aussparung 88 setzt so die Aussparung 68 für das Schweißmesser 56 über die Folienebene 18 hinaus fort.

## Patentansprüche

1. Längstrennschweißvorrichtung (31) zum Längsverschweißen einer Längsseite (69) einer oberen (14) und einer unteren (16) Folienbahn, wobei die Längstrennschweißvorrichtung (31) mindestens ein erstes Paar von über jeweils mindestens zwei Rollen (47, 46; 51, 52) laufenden Endlosriemen (72, 79) aufweist, die die obere (14) und die untere (16) Folienbahn zwischen sich einziehen und in einer Folienebene (18) führen, wobei parallel zu dem mindesten einen ersten Paar von Endlosriemen (72, 79) ein Schweißmesser (56) auf einer ersten Seite der Folienebene (18) angeordnet ist, wobei ein auf der ersten Seite der Folienebene (18) angeordneter Endlosriemen (72) des ersten Paars von Endlosriemen (72, 79) an der Folienebene (18) in einer Nut (83) einer Stützschiene (80) geführt ist, **dadurch gekennzeichnet, dass** eine Seitenwand (84) der Nut (83) eine Aussparung (68) aufweist, in der das Schweißmesser (56) unmittelbar an dem Endlosriemen (72) angeordnet ist.

2. Längstrennschweißvorrichtung nach Anspruch 1, **dadurch gekennzeichnet, dass** die obere (14) und die untere (16) Folie ein Packgut (12) zwischen sich einhüllen und die Seitenwand (84) eine dem Packgut (12) abgewandte Seitenwand ist.

3. Längstrennschweißvorrichtung nach Anspruch 1 oder 2, **dadurch gekennzeichnet, dass** die Nut (83) einen U-förmigen Querschnitt aufweist und die Seitenwand (84) einen Schenkel des U bildet.

4. Längstrennschweißvorrichtung nach einem der Ansprüche 1 bis 3, **dadurch gekennzeichnet, dass** ein zweites Paar von über jeweils mindestens zwei Rollen. (46, 48, 49; 51, 53, 54) laufenden Endlosriemen (42, 44) vorgesehen ist, die die obere (14) und die untere (16) Folienbahn zwischen sich einziehen und in der Folienebene (18) führen, wobei zwischen dem ersten Paar von Endlosriemen (42, 44) und dem zweiten Paar von Endlosriemen (72, 79) ein Längsspalt (75) gebildet ist, in dem das Schweißmesser (56) angeordnet ist.

5. Längstrennschweißvorrichtung nach einem der Ansprüche 1 bis 4, **dadurch gekennzeichnet, dass** die Breite des ersten Paars von Endlosriemen (72, 79) kleiner als die Breite des zweiten Paars von Endlosriemen (42, 44) ist.

6. Längstrennschweißvorrichtung nach einem der Ansprüche 1 bis 5, **dadurch gekennzeichnet, dass** die Breite des ersten Paars von Endlosriemen (72, 79) 2,5 bis 6 mm beträgt.

7. Längstrennschweißvorrichtung nach einem der Ansprüche 1 bis 6, **dadurch gekennzeichnet, dass** das erste Paar von Endlosriemen (72, 79) jeweils über mindestens zwei Rollen (47, 46; 51, 52) läuft, wobei zwei der mindestens zwei Rollen (47, 46; 51, 52) in einem Betriebszustand relativ zueinander verschiebbar sind.

8. Längstrennschweißvorrichtung nach einem der Ansprüche 4 bis 7, **dadurch gekennzeichnet, dass** das zweite Paar von Endlosriemen (42, 49) jeweils über mindestens drei Rollen (46, 48, 49; 51, 53, 54) läuft, wobei zwei (48, 49; 53, 54) der mindestens drei Rollen (46, 48, 49; 51, 53, 54) in einem Betriebszustand übereinander angeordnet und relativ zueinander verschiebbar sind.

9. Längstrennschweißvorrichtung nach einem der Ansprüche 1 bis 8, **dadurch gekennzeichnet, dass** in dem Längsspalt (75) vor dem Schweißmesser (56) eine Spannrolle (58) auf der der ersten Seite gegenüberliegenden Seite der Folienebene (18) angeordnet ist, wobei die Spannrolle (58) federnd abgestützt ist und die Folienebene (18) durchdringt.

10. Längstrennschweißvorrichtung nach einem der Ansprüche 1 bis 9, **dadurch gekennzeichnet, dass** auch ein auf der der ersten Seite gegenüberliegenden Seite der Folienebene (18) angeordneter Endlosriemen (79) des ersten Paars von Endlosriemen (72, 79) an der Folienebene (18) in einer Nut (85) einer Stützschiene (87) geführt ist, und eine Seitenwand (86) der Nut (85) eine Aussparung (88) aufweist, in der das Schweißmesser (56) zumindest teilweise angeordnet ist.

11. Längstrennschweißsystem (24) **gekennzeichnet durch** zwei Längstrennschweißvorrichtungen (31) gemäß einem der Ansprüche 1 bis 10 zum Längsverschweißen beider Längsseiten (69) der oberen (14) und der unteren (16) Folienbahn.

12. Längstrennschweißsystem nach Anspruch 11, **dadurch gekennzeichnet, dass** die zwei Längstrennschweißvorrichtungen (31) einander gegenüberliegend angeordnet und bezüglich einer Folientransportrichtung (T) der oberen (14) und der unteren (16) Folie spiegelbildlich ausgebildet sind.

13. Folienverpackungsmaschine (10), wobei in Bezug auf eine Folientransportrichtung (T) vor der Längstrennschweißvorrichtung (31) eine Quertrennschweißvorrichtung (22) vorgesehen ist, die die obere (14) und die untere (16) Folienbahn zumindest teilweise verschweißt und trennt, wobei an mindestens einer Längsseite (69) der oberen (14) und der unteren (16) Folienbahn mindestens ein Paar von Rädern (32, 34; 35, 36) angeordnet ist, deren Abrollrichtung relativ zu der Transportrichtung (T) unter einem Winkel (70) nach außen verläuft, wobei ein Rad des mindestens einen Paars von Rädern (32, 34; 35, 36) eine gummierte Oberfläche aufweist und ein anderes Rad des mindestens einen Paars von Rädern (32, 34; 35, 36) eine gerändelte Oberfläche aufweist, **gekennzeichnet durch** eine Längstrennschweißvorrichtung (31) nach einem der Ansprüche 1 bis 10.

14. Folienverpackungsmaschine nach Anspruch 13, **dadurch gekennzeichnet, dass** an beiden Längsseiten (69) der oberen (14) und der unteren (16) Folienbahn jeweils mindestens ein Paar von Rädern (32, 34; 35, 36) angeordnet ist, wobei die eine gummierte Oberfläche aufweisenden Räder einander gegenüberliegen und die eine gerändelte Oberfläche aufweisenden Räder einander gegenüberliegen.

15. Folienverpackungsmaschine nach Anspruch 13 oder 14, **dadurch gekennzeichnet, dass** das mindestens eine Paar von Rädern (32, 34; 35, 36) in Bezug auf eine Folientransportrichtung (T) vor der Quertrennschweißvorrichtung (22) angeordnet ist.

## Claims

1. Longitudinal separation welding device (31) for the longitudinal welding of a longitudinal side (69) of an upper (14) and a lower (16) film web, the longitudinal separation welding device (31) having at least one first pair of endless belts (72, 79) which run in each case over at least two rollers (47, 46; 51, 52) and which draw the upper (14) and lower (16) film web in between themselves and guide them in a film plane (18), a welding knife (56) being arranged parallel to the at least one first pair of endless belts (72, 79) on a first side of the film plane (18), an endless belt (72), arranged on the first side of the film plane (18), of the first pair of endless belts (72, 79) being guided on the film plane (18) in a groove (83) of a supporting rail (80), **characterized in that** a side wall (84) of the groove (83) has a clearance (68) in which the welding knife (56) is arranged directly on the endless belt (72).

2. Longitudinal separation welding device according to Claim 1, **characterized in that** the upper (14) and lower (16) film envelop a packageable article (12) between themselves, and the side wall (84) is a side wall facing away from the packageable article (12).

3. Longitudinal separation welding device according to Claim 1 or 2, **characterized in that** the groove (83) has a U-shaped cross section and the side wall (84) forms one leg of the U.

4. Longitudinal separation welding device according to one of Claims 1 to 3, **characterized in that** a second pair of endless belts (42, 44) is provided, which run in each case over at least two rollers (46, 48, 49; 51, 53, 54) and which draw the upper (14) and lower (16) film web between themselves and guide them in the film plane (18), a longitudinal gap (75) in which the welding knife (56) is arranged, being formed between the first pair of endless belts (42, 44) and the second pair of endless belts (72, 79).

5. Longitudinal separation welding device according to one of Claims 1 to 4, **characterized in that** the width of the first pair of endless belts (72, 79) is smaller than the width of the second pair of endless belts (42, 44).

6. Longitudinal separation welding device according to one of Claims 1 to 5, **characterized in that** the width of the first pair of endless belts (72, 79) amounts to 2.5 to 6 mm.

7. Longitudinal separation welding device according to one of Claims 1 to 6, **characterized in that** the first pair of endless belts (72, 79) runs in each case over at least two rollers (47, 46; 51, 52), two of the at least two rollers (47, 46; 51, 52) being displaceable in relation to one another in an operating state.

8. Longitudinal separation welding device according to one of Claims 4 to 7, **characterized in that** the second pair of endless belts (42, 49) runs in each case over at least three rollers (46, 48, 49; 51, 53, 54), two (48, 49; 53, 54) of the at least three rollers (46, 48, 49; 51, 53, 54) being arranged one above the other and being displaceable in relation to one another in an operating state.

9. Longitudinal separation welding device according to one of Claims 1 to 8, **characterized in that** a tension roller (58) is arranged in the longitudinal gap (75), upstream of the welding knife (56) on that side of the film plane (18) which lies opposite the first side, the tensioning roller (58) being supported resiliently and penetrating through the film plane (18).

10. Longitudinal separation welding device according to one of Claims 1 to 9, **characterized in that** an endless belt (79) of the first pair of endless belts (72, 79), the said endless belt being arranged on that side of the film plane (18) which lies opposite the first side, is also guided on the film plane (18) in a groove (85) of a supporting rail (87), and a side wall (86) of the groove (85) has a clearance (88) in which the welding knife (56) is at least partially arranged.

11. Longitudinal separation welding system (24), **characterized by** two longitudinal separation welding devices (31) according to one of Claims 1 to 10 for the longitudinal welding of both longitudinal sides (69) of the upper (14) and lower (16) film web.

12. Longitudinal separation welding system according to Claim 11, **characterized in that** the two longitudinal separation welding devices (31) are arranged opposite one another and are designed mirror-symmetrically with respect to a film transport direction (T) of the upper (14) and lower (16) film.

13. Film packaging machine (10), there being provided upstream of the longitudinal separation welding device (31) with respect to a film transport direction (T) a transverse separation welding device (22) which at least partially welds and separates the upper (14) and lower (16) film web, there being arranged on at least one longitudinal side (69) of the upper (14) and lower (16) film web at least one pair of wheels (32, 34; 35, 36), on which the rolling direction in relation to the transport direction (T) runs outwards at an angle (70), one wheel of the at least one pair of wheels (32, 34; 35, 36) having a rubberized surface, and another wheel of the at least one pair of wheels (32, 34; 35, 36) having a knurled surface, **characterized by** a longitudinal separation welding device (31) according to one of Claims 1 to 10.

14. Film packaging machine according to Claim 13, **characterized in that** at least one pair of wheels (32, 34; 35, 36) is arranged in each case on both longitudinal sides (69) of the upper (14) and lower (16) film web, the wheels which have a rubberized surface lying opposite one another, and the wheels which have a knurled surface lying opposite one another.

15. Film packaging machine according to Claim 13 or 14, **characterized in that** the at least one pair of wheels (32, 34; 35, 36) is arranged upstream of the transverse separation welding device (22) with respect to a film transport direction (T).

## Revendications

1. Dispositif pour souder et couper longitudinalement (31), pour souder longitudinalement un côté longitudinal (69) d'une bande de film supérieure (14) et d'une bande de film inférieure (16), le dispositif pour souder et couper longitudinalement (31) présentant au moins une première paire de courroies dans fin (72, 79) passant chacune sur au moins deux rouleaux (47, 46 ; 51, 52), lesquelles courroies sans fin tirent entre elles la bande de film supérieure (14) et la bande de film inférieure (16), et conduisent dans un plan de film (18), un couteau de soudure (56) étant disposé parallèlement à l'au moins une paire de courroies sans fin (72, 79) sur un premier côté du plan de film (18), une courroie sans fin (72) disposée sur le premier côté du plan de film (18) de la première paire de courroies sans fin (72, 79) étant guidée sur le plan de film (18) dans une rainure (83) d'un rail de support (80),
**caractérisé en ce qu'**une paroi latérale (84) de la rainure (83) présente un évidement (68) dans lequel est disposé le couteau de soudure (56), directement contre la courroie sans fin (72).

2. Dispositif pour souder et couper longitudinalement selon la revendication 1, **caractérisé en ce que** les bandes de film supérieure (14) et inférieure (16) enveloppent entre elles un produit à emballer (12), et la paroi latérale (84) est une paroi latérale opposée au produit à emballer (12).

3. Dispositif pour souder et couper longitudinalement selon la revendication 1 ou 2, **caractérisé en ce que** la rainure (83) présente une section transversale en forme de U et la paroi latérale (84) forme une branche du U.

4. Dispositif pour souder et couper longitudinalement selon l'une quelconque des revendications 1 à 3, **caractérisé en ce qu'**il est prévu une deuxième paire de courroies sans fin (42, 44) s'étendant chacune sur au moins deux rouleaux (46, 48, 49 ; 51, 53, 54), lesquelles tirent entre elles la bande de film supérieure (14) et la bande de film inférieure (16) et conduisent dans le plan de film (18), une fente longitudinale (75) étant formée entre la première paire de courroies sans fin (42, 44) et la deuxième paire de courroies sans fin (72, 79), le couteau de soudure (56) étant disposé dans cette fente longitudinale.

5. Dispositif pour souder et couper longitudinalement selon l'une quelconque des revendications 1 à 4, **caractérisé en ce que** la largeur de la première paire de courroies sans fin (72, 79) est inférieure à la largeur de la deuxième paire de courroies sans fin (42, 44).

6. Dispositif pour souder et couper longitudinalement selon l'une quelconque des revendications 1 à 5, **caractérisé en ce que** la largeur de la première paire de courroies sans fin (72, 79) vaut 2,5 à 6 mm.

7. Dispositif pour souder et couper longitudinalement selon l'une quelconque des revendications 1 à 6, **caractérisé en ce que** la première paire de courroies sans fin (72, 79) s'étend à chaque fois sur au moins deux rouleaux (47, 46 ; 51, 52), deux des au moins deux rouleaux (47, 46 ; 51, 52) pouvant être déplacés l'un par rapport à l'autre dans un état de fonctionnement.

8. Dispositif pour souder et couper longitudinalement selon l'une quelconque des revendications 4 à 7, **caractérisé en ce que** la deuxième paire de courroies sans fin (42, 49) s'étend à chaque fois sur au moins trois rouleaux (46, 48, 49 ; 51, 53, 54), deux (48, 49 ; 53, 54) des au moins trois rouleaux (46, 48, 49 ; 51, 53, 54) étant disposés l'un au-dessus de l'autre dans un état de fonctionnement et pouvant être déplacés l'un par rapport à l'autre.

9. Dispositif pour souder et couper longitudinalement selon l'une quelconque des revendications 1 à 8, **caractérisé en ce qu'**un rouleau de serrage (58) est disposé dans la fente longitudinale (75) avant le couteau de soudure (56), du côté du plan de film (18) opposé au premier côté, le rouleau de serrage (58) étant supporté élastiquement et traversant le plan de film (18).

10. Dispositif pour souder et couper longitudinalement selon l'une quelconque des revendications 1 à 9, **caractérisé en ce qu'**une courroie sans fin (79) de la première paire de courroies sans fin (72, 79) disposée également du côté du plan de film (18) opposé au premier côté est guidée sur le plan de film (18) dans une rainure (85) d'un rail de support (87), et une paroi latérale (86) de la rainure (85) présente un évidement (88) dans lequel est disposé au moins en partie le couteau de soudure (56).

11. Système pour souder et couper longitudinalement (24), **caractérisé par** deux dispositifs pour souder et couper longitudinalement (31) selon l'une quelconque des revendications 1 à 10, pour le soudage longitudinal des deux côtés longitudinaux (69) de la bande de film supérieure (14) et de la bande de film inférieure (16).

12. Système pour souder et couper longitudinalement selon la revendication 11, **caractérisé en ce que** les deux dispositifs pour souder et couper longitudinalement (31) sont disposés en face l'un de l'autre et sont réalisés avec une symétrie spéculaire par rapport à une direction de transport de film (T) de la bande de film supérieure (14) et de la bande de film inférieure (16).

13. Machine d'emballage par film (10), dans laquelle, par rapport à une direction de transport de film (T) avant le dispositif pour souder et couper longitudinalement (31), est prévu un dispositif pour souder et couper transversalement (22), lequel soude et coupe au moins en partie la bande de film supérieure (14) et la bande de film inférieure (16), au moins une paire de roues (32, 34 ; 35, 36) étant disposée sur au moins un côté longitudinal (69) de la bande de film supérieure (14) et de la bande de film inférieure (16), dont la direction de déroulement s'étend vers l'extérieur par rapport à la direction de transport (T) suivant un angle (70), une roue de l'au moins une paire de roues (32, 34 ; 35, 36) présentant une surface caoutchoutée et une autre roue de l'au moins une paire de roues (32, 34 ; 35, 36) présentant une surface moletée, **caractérisée par** un dispositif pour souder et couper longitudinalement (31) selon l'une quelconque des revendications 1 à 10.

14. Machine d'emballage par film selon la revendication 13, **caractérisée en ce qu'**au moins une paire de roues (32, 34 ; 35, 36) est à chaque fois disposée sur les deux côtés longitudinaux (69) de la bande de film supérieure (14) et de la bande de film inférieure (16), les roues présentant une surface caoutchoutée se situant les unes en face des autres et les roues présentant une surface moletée se situant les unes en face des autres.

15. Machine d'emballage par film selon la revendication 13 ou 14, **caractérisée en ce que** l'au moins une paire de roues (32, 34 ; 35, 36) est disposée par rapport à une direction de transport de film (T) avant le dispositif pour souder et couper transversalement (22).
